# EUROPEAN PATENT SPECIFICATION

(11) **EP 3 216 119 B1**
(45) Date of publication and mention of the grant of the patent: **04.03.2020**
(21) Application number: 14793566.2
(22) Date of filing: 05.11.2014
(51) Int. Cl.: H02M 7/00, H01G 4/28, H01G 4/38

(54) **CAPACITOR UNIT DIVIDED IN A PLURALITY OF PIECES FOR POWER CONVERTER APPLICATIONS**
IN EINE VIELZAHL VON TEILEN UNTERTEILTE KONDENSATOREINHEIT FÜR LEISTUNGSWANDLERANWENDUNGEN
UNITÉ DE CONDENSATEUR DIVISÉE EN UNE PLURALITÉ DE PIÈCES POUR DES APPLICATIONS DE CONVERTISSEURS D'ÉNERGIE

(43) Date of publication of application: 13.09.2017
(73) Proprietor: ABB Power Grids Switzerland AG, 5400 Baden (CH)
(72) Inventor: SALINAS, Ener, S-722 10 Västerås (SE); PERSSON, Erik, S-723 35 Västerås (SE); DELINCE, Francois, B-5640 Biesme (BE); HYTTINEN, Mats, S-771 43 Ludvika (SE); CHEN, Nan, S-722 13 Västerås (SE); LAIHONEN, Sari, S-724 82 Västerås (SE)
(74) Representative: Kransell & Wennborg KB
(86) International application number: PCT/EP2014/073805
(87) International publication number: WO 2016/070913

(56) References cited:
- EP-A1- 2 190 015
- WO-A1-2010/049764
- WO-A1-2013/140963

## Description

### TECHNICAL FIELD

The present disclosure relates generally to the field of power converters. The present disclosure relates in particular to a capacitor unit, a converter cell and a valve unit for such power converters.

### BACKGROUND

A high voltage direct current (HVDC) converter station is a type of station adapted to convert high voltage direct current (DC) to alternating current (AC) or the reverse. An HVDC converter station may comprise a plurality of elements such as the converter itself (or a plurality of converters connected in series or in parallel), an alternating current switch gear, transformers, capacitors, filters, a direct current switch gear and other auxiliary elements.

In one configuration, a building block or a valve unit of a power converter, such as an HVDC power converter, may comprise a plurality of converter cells connected in series. In a power converter cell, a plurality of solid-state semiconductor switching devices, such as thyristors or transistors like IGBTs, may be associated with a capacitor adapted to store energy for the converter cells. For example the publication WO2010/49764 discloses a converter cell comprising a capacitor unit.

A general challenge in the present technical field is to provide a more compact converter station, for e.g. offshore HVDC applications, in order to facilitate installation and transport of the converter station.

### SUMMARY

An object of at least some embodiments of the present disclosure is to wholly or partly address the above mentioned issue.

This and other objects are achieved by means of a capacitor unit as defined in the appended independent claim. Other embodiments are defined by the dependent claims.

According to a first general aspect, there is provided a capacitor unit comprising a hollow body extending along an axial direction. The body includes a plurality of pieces, wherein each piece forms a section of the hollow body. Further, at least one of the pieces is a detachable section of the hollow body and a piece includes at least one capacitor element.

The present disclosure provides a capacitor unit with a body including a plurality of pieces or sections (in particular capacitive pieces). The capacitor unit does not consist of one single piece (or one single mechanical block), but several (at least two) pieces. The pieces, or "slices" in the case of a circular capacitor, form the capacitor unit when assembled together. It will be appreciated that each of the pieces or sections is a sub-unit (or sub-element) of the capacitor unit and acts itself as a capacitor.

The capacitor unit may be formed by assembling N pieces, which facilitates the installation of the capacitor unit in a valve unit of a power converter hall since one of the N pieces of the capacitor unit is more easy to handle than the full capacitor unit (i.e. if the capacitor unit was made of a single piece). A piece or sub-element of a capacitor unit has also a lower weight than the whole capacitor unit (as compared to a single piece making the full capacitor unit).

By the term capacitor element is meant a component functioning as a capacitor, i.e. acting as an electric component used to store energy electrostatically in an electric field. A capacitor element (or capacitor) is normally built by metal layers (or plates) between which an insulating media is arranged.

By the term hollow body is meant a body including a cavity, e.g. a through hole. In the present context, the hollow body is formed of a plurality of pieces which, when assembled, formed a hole at which other electric components may be arranged. In other words, the hollow body delimits an inner space, i.e. the cavity (or through hole), at which such other electric components may be arranged. It will be appreciated that in some embodiments the pieces forming the hollow body may be arranged adjacent to each other, i.e. in a tight arrangement with a mechanical contact between two adjacent or successive pieces. However, the pieces forming the hollow body may in some other embodiments be arranged close to each other, yet with a gap between two successive pieces. Thus, the hollow body may also be formed by a loose arrangement of the pieces, i.e. with a gap between the pieces, which is advantageous as it releases some pressure. The hollow body may therefore also be referred to as a hollow arrangement of the plurality of pieces.

It will also be appreciated that the dimensions of the hollow body may determine the properties, and in particular the possible capacitance and voltage, of the capacitor unit for a particular selection of materials and number of capacitor elements arranged in each of the pieces. Further, the height of the hollow body along the axial direction may be determined by the height of the necessary capacitor unit for achieving a desired capacitance or desired voltage.

It will also be appreciated that a piece of the capacitor unit (or the hollow body) may itself include a plurality of capacitor elements or capacitive sub-elements connected together to form a "capacitive" piece (i.e. functioning as a capacitor).

The capacitor unit of the present disclosure facilitates maintenance operations since at least one piece is a detachable section of the hollow body. As a result, at least one piece may individually be removed and replaced without disturbing the surrounding pieces of the capacitor unit. This improves also the accessibility to the inner space (or interior space) delimited by the hollow body of the capacitor unit, at which inner space electronic components (such as switching semiconductor devices) may be arranged. By removing one piece of the capacitor unit, any components located in the inner space may be tested, taken out and possibly replaced or repaired. The inventors have realized that such a design of a capacitor unit facilitates maintenance operation and reduces the space requirement for maintenance, which in turn may result in a more compact power station.

In other words, the present disclosure provides a capacitor unit divided in a plurality of pieces, wherein at least one of the pieces is detachable from the capacitor unit. It will be appreciated that, in some embodiments, each of the pieces of the hollow body may be detachable (i.e. form detachable sections of the hollow body).

The capacitor unit of the present disclosure is also advantageous in that it reduces Eddy currents (or Foucault currents) generated at the outside surface of the capacitor unit (i.e. on the capacitor box or capacitor enclosure/container) when it includes electrically conductive material. Eddy currents flow in closed loops within electrically conductive materials (conductors), in planes perpendicular to the magnetic field. The magnitude of the current in a loop is, among others, proportional to the area of the loop. As compared to a capacitor unit based on a single piece, the use of a plurality of smaller pieces breaks the induction loop into smaller parts, which thereby reduces the amplitude of the Eddy currents.

According to an embodiment, the hollow body may be defined by an outside surface which is elliptic, circular and/or which comprises at least one rounded corner. In particular, the hollow body, and consequently the capacitor unit, may have a cylindrical shape or the shape of a parallelepiped. It will be appreciated however that, for the purpose of an HVDC converter cell, a circular shape or at least a shape with rounded corners is advantageous since this provides a smoother surface, which in turn facilitates the HV insulation as there are less sharp turns and edges pointing out. As a result, insulation distances can be shortened and for example corona rings may be partly or completely avoided. The use of an hollow body with an outside surface comprising rounded corners, and e.g. being circular, provides therefore the advantage that space can be more efficiently used, thereby reducing the size of the power station.

A circular shaped capacitor unit provides a smooth converter cell profile, which reduces requirement on insulation design and provides other benefits such as a lower stray inductance in current commutation loop.

According to an embodiment, the pieces may be distributed around the axial direction. The pieces may be arranged (or extend) in a plane intersecting the axial direction.

It will also be appreciated that the pieces may then be arranged adjacent to, or at least next to, each other to form a loop around the axial direction of the capacitor unit. Although the pieces may in some embodiments be attached one to another in a tight manner to form a closed loop (or fully closed loop), in some other embodiments, a gap may be formed between two successive pieces of the loop, thereby providing a more loose arrangement.

As an example, the hollow body may include two to ten pieces. When joining these two to ten pieces, the capacitive body of the capacitor unit may be formed. The pieces may be shaped such that a cavity (or through hole) is formed in a central portion of the capacitive body such that a capacitive body with a hollow center is obtained.

According to an embodiment, each of the pieces may define a section of a ring such that, when the pieces are assembled together, the body of the capacitor unit is ring-shaped. In other words, the pieces may be angularly distributed around the axial direction, i.e. the hollow body may have a circular cross-section along a plane intersecting the axial direction. With the present embodiment, an annular capacitor is obtained, which provides a smooth outside surface with the advantage of reducing the requirement on insulation and thereby available space.

In other embodiments of the present disclosure, however, it may be envisaged that the cross section (along a plane intersecting the axial direction) of the hollow body is not necessarily round or circular but instead is triangular, rectangular, or square with rounded corners, depending on the number of piece used to form the capacitor unit.

According to an embodiment, the hollow body may define an inner space (or cavity) having an elliptic cross-sectional shape, a circular cross-sectional shape, a polygonal cross-sectional shape, or a square cross-sectional shape across the axial direction. While it is advantageous but not always necessary that the outside surface of the hollow body includes rounded corners and is circular, the inner space (or internal space) delimited by the hollow body (i.e. the central hollow portion of the body having the shape of a closed loop) may have various shapes, depending on the desired arrangement of the electric components within the inner space. In a specific embodiment, the inner space delimited by the hollow body may be a square, which may provide an improved filling factor of the devices installed in it.

According to an embodiment, a piece may comprise at least one surface defining a portion of an outside surface of the hollow body, at least one surface defining a portion of an inner space defined by the hollow body and at least one surface in contact with a neighboring piece. In a more specific embodiment, a piece may be a trapezoidal block with the surface defining a portion of the outside surface of the hollow body being a curved surface (i.e. with a cross-section being an arc of a circle or ellipse). Such a trapezoidal block may form a section of a ring or annular capacitor with a rectangular or square inner space.

According to an embodiment, the capacitor unit may further comprise at least one attaching device for assembling (or joining) the plurality of pieces together.

Several types of attaching devices (or attaching means or fasteners) may be envisaged such as screws or clips. For this purpose, the surfaces of the pieces forming the outside of the hollow body may include shallow indentations for inserting/lodging screws connecting two neighboring pieces of the capacitor unit. An additional layer of shielding for smoothing the surface of the capacitor unit may be provided after the screws have been tightened and the pieces assembled.

According to another alternative, two neighboring or successive pieces may be assembled and disassembled using gaps between the two successive capacitor units of a stack of capacitor units. Some kind of specially designed tool may be inserted in such gaps to access fasteners located within the internal space defined by the hollow body.

According to yet another alternative, the pieces of the capacitor unit may be assembled or disassembled using an attaching system based on a 'plug and play' principle. For example, the bushing outlet of capacitor units may be designed with an electromechanically locking structure, wherein each capacitor unit may be pushed in and have automatic connection.

According to an embodiment, there is provided a converter cell comprising a capacitor unit as defined in any one of the preceding embodiments and at least one switching device arranged at an inner space delimited by the hollow body of the capacitor unit such that the capacitor unit surrounds the at least one switching device.

For this purpose, according to an embodiment, the hollow body may delimit an inner space adapted to receive at least one switching device. The switching devices (e.g. semiconductor switches) may be arranged in a way to more evenly distribute the switched current around the area of the capacitor shape, e.g. to reduce hot spot temperatures and to increase the long-term reliability of the capacitor.

The switching device may be a semiconductor-based switching device. By way of examples, the switching device may be an insulated-gate bipolar transistor (IGBT), a metal-oxide-semiconductor field-effect transistor (MOSFET), an integrated gate-commutated thyristor (IGCT), a gate turn-off thyristor (GTO), a high electron mobility transistor (HEMT) and a hetero junction bipolar transistor (HBT). Other types of transistors (or semiconductor-based switching devices) may be envisaged.

Further, it will be appreciated that the present disclosure is not limited to a specific semiconductor technology. It will be appreciated that switching devices based on silicon or silicon carbide may be employed, in particular for MOSFETs, IGBTs, IGCTs and GTOs as examples. Switching devices based on Gallium Nitride or Gallium Arsenide may also be employed, in particular for HEMTs or HBTs as examples. Other types of semiconductors providing switching devices for high power applications may be envisaged.

It will be appreciated that the converter cell may further comprise other electric components or devices. For example, the converter cell may also include a cooling device and/or a by-pass switch which allows a current to bypass the switching devices of a converter cell upon failure of a switching device, thereby reducing the risk of damages of the components of a converter cell, e.g. caused by short circuit currents. The bypass switch may be a mechanical switch or an electric switch such as for example a thyristor. Further, the converter cell may also include means for reducing the failure currents. Other components and devices listed herein may be arranged within the hollow center of the capacitor unit.

According to an embodiment, the capacitor unit may further comprise electrical connectors (or bushings) arranged at a wall of a piece for connection to at least one switching device. The wall may face the inner space delimited by the hollow body. The present embodiment therefore provides a capacitor unit wherein the connections to any switching device are realized within the hollow center of the capacitive body, thereby providing a more compact converter cell.

According to an embodiment, a valve unit is provided. The valve unit may comprise a plurality of converter cells as defined in any one of the preceding embodiments. The plurality of converter cells may be arranged as a stack. In particular, the converter cells may be arranged such that the capacitor units of two adjacent converter cells extend along a common axial direction. Using circular capacitor units, such piling of the converter cells results in a cylindrical valve unit, which is advantageous for space management.

As mentioned above, maintenance operations in such a valve unit is improved since the capacitor units of the converter cells are divided in sections. Thus, if a converter cell located within the stack, e.g. in the middle of the stack, is deficient, then it is possible to detach (e.g. unscrew) a piece (i.e. a section) of the capacitor unit and then perform maintenance. Any deficient electronic switch or other device arranged in the center portion of this converter cell could then be repaired or replaced. Similarly, the detached piece may also be repaired or replaced by another detachable piece. Building a valve unit with converter cells based on capacitor units according to the present disclosure facilitates access to the various parts and components of the valve unit, thereby facilitating maintenance. With the capacitor units of the present disclosure, maintenance may be performed without the need of disassembling the various converter cells of the valve unit, which would require space. Providing a valve unit based on capacitor units as described in any one of the preceding embodiments is therefore also advantageous in that a more compact power converter station may be realized.

According to an embodiment, a high voltage direct current (HVDC) converter station is provided. The HVDC converter station may comprise at least two valve units as defined in any one of the preceding embodiments.

The present disclosure is applicable for power equipments with various voltage levels such as e.g. a high voltage power converter station but also medium voltage equipments, in which it is desired to improve space management. The present disclosure is advantageous in any applications wherein a stack of converter cells may be used. For exemplifying purposes only, embodiments of the present disclosure may be beneficial to achieve converters such as a static synchronous compensator (STATCOM) for flexible AC transmission systems (FACTS) applications, motor drives, sub-sea power converters and DC-DC converters for DC grid. Other applications may however be envisaged. The present disclosure achieves this by improving maintenance operations via a piecewise capacitor unit (i.e. a capacitor unit divided in several pieces).

The present disclosure is generally advantageous for applications in which a more compact power equipment is desired, such as in applications where space for installation of the electric power equipment is limited and/or for offshore wind farm applications.

It will be appreciated that other embodiments using all possible combinations of features recited in the above described embodiments may be envisaged.

### BRIEF DESCRIPTION OF THE DRAWINGS

Exemplifying embodiments will now be described in more detail, with reference to the following appended drawings:
Figure 1 shows a schematic perspective view of a capacitor unit in accordance with an embodiment;
Figure 2 shows a schematic top view of capacitor units in accordance with some embodiments;
Figure 3 shows a schematic view of a capacitor unit in accordance with another embodiment;
Figure 4 shows a schematic view of a piece of a capacitor unit according to an embodiment;
Figure 5 shows a schematic perspective view and a schematic side view of a power converter cell in accordance with an embodiment;
Figure 6 shows a circuit diagram illustrating the electrical connections of a converter cell in accordance with an embodiment; and
Figure 7 shows a schematic view of a valve unit of an HVDC converter in accordance with an embodiment.

As illustrated in the figures, the sizes of the elements, layers and regions may be exaggerated for illustrative purposes and, thus, are provided to illustrate the general structures of the embodiments. Like reference numerals refer to like elements throughout.

### DETAILED DESCRIPTION

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

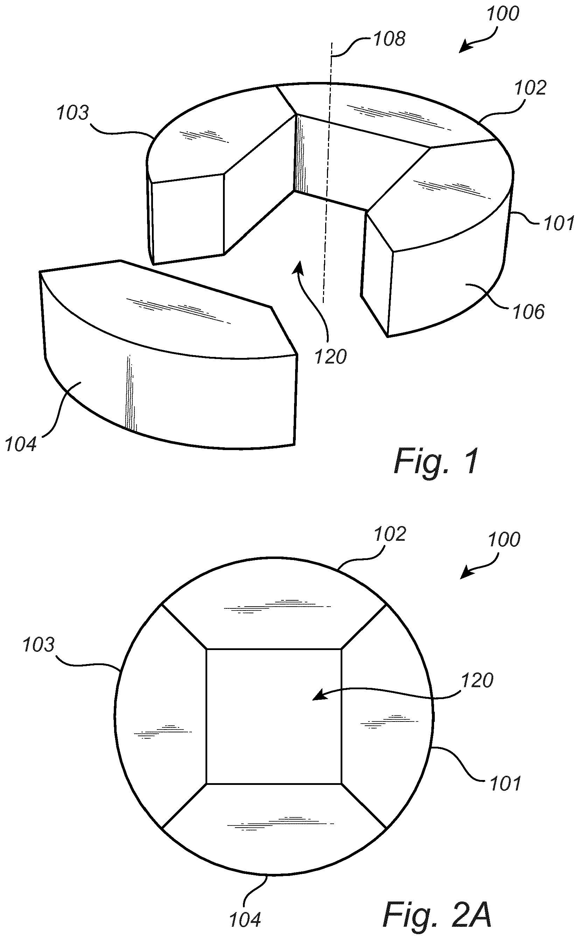

With reference to Figure 1, a capacitor unit 100 according to an embodiment is described.

Figure 1 shows a schematic perspective view of the capacitor unit 100. The capacitor unit 100 comprises four pieces 101-104, which are four pieces. When assembled together, the four pieces 101-104 form a hollow body extending along an axial direction 108.

The pieces 101-104 delimit a space or area 120, also referred to as inner space in the following, which corresponds to the hollow center of the capacitor unit 100. Each one of the pieces 101-104 forms a section of the hollow body and at least one of the pieces is a detachable section of the hollow body. Figure 1 illustrates that the piece denoted 104 is detached from the other pieces.

The capacitor unit 100 may have different shapes. In some embodiments, an outside surface 106 of the body of the capacitor unit 100 may be circular, such as represented in Figure 1, but it may be envisaged that the outside surface of the body of the capacitor unit is elliptic and/or rectangular or square or any other form. It may however be appreciated that the outside surface of the body of the capacitor unit 100 may advantageously comprise rounded corners.

According to an embodiment, each of the pieces 101-104 may define a section of a ring such that the hollow body (or capacitor unit 100) is ring-shaped, thereby forming an annular capacitor, such as shown in Figure 1.

Still referring to Figure 1, the pieces 101-104 may be distributed around the axial direction 108. The pieces 101-104 extend in a plane intersecting the axial direction 108. In particular, Figure 1 shows that the pieces 101-104 are arranged in a plane which is perpendicular to the axial direction 108.

Although four pieces 101-104 form the capacitor unit 100 in the example shown in Figure 1, it will be appreciated that the capacitor unit 100 may be divided in another number of pieces. The capacitor unit 100 may be divided in at least two pieces such that at least one piece is detachable from the capacitor unit. By detachable is meant that the piece may be detached from the capacitor unit without having to disassemble the whole capacitor unit, i.e. without having to detach all the other pieces. The detachable piece 104 is removable from the capacitor unit 100 and may be put back in place.

Further, although only one of the pieces 101-104 is shown to be detached from the capacitor unit 100 in Figure 1, i.e. the piece denoted 104 in the present example, it will be appreciated that all the pieces 101-104 may be detachable from the capacitor unit 100.

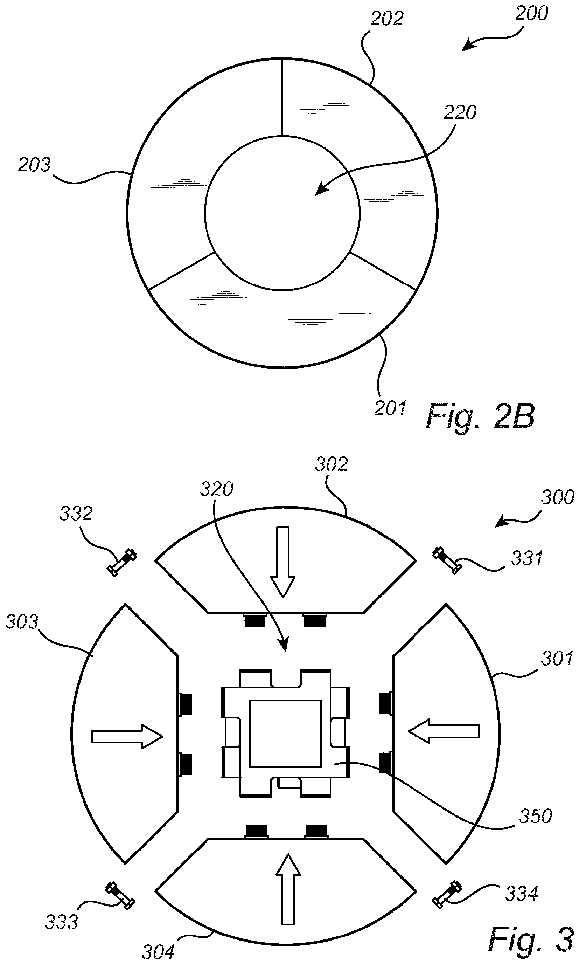

With reference to Figure 2, capacitor units in accordance with some embodiments are described.

Figure 2 shows a schematic top view of two different capacitor units 100 and 200 in accordance with some embodiments.

Figure 2 shows a top view of a capacitor unit 100 which may be equivalent to the capacitor unit 100 described with reference to Figure 1. In particular, the capacitor unit 100 includes a capacitive body delimiting an area or inner space 120 which is a square. By inner space is meant the space or area which is located within the closed loop defined by the hollow body formed by the pieces 101-104. In other words, the inner space 120 corresponds to the hollow center of the capacitor unit 100.

Figure 2 shows also a top view of another capacitor unit 200 which may be equivalent to the capacitor unit described with reference to Figure 1 except that the area or inner space 220 defined by the capacitive body of the capacitor unit 200 is circular. The capacitor unit 200 comprises also three pieces 201-203 only to form the capacitive hollow body. Although Figure 2 shows two examples of possible shapes of inner spaces defined by the hollow bodies of two capacitor units, other shapes may be envisaged. For example, the inner space may also be elliptic or rectangular.

With reference to Figure 3, a capacitor unit in accordance with an embodiment is described.

Figure 3 shows a schematic view of a capacitor unit 300 which may be equivalent to any one of the capacitor units described with reference to Figures 1 and 2 except that Figure 3 illustrates at least one alternative for attaching the pieces of the capacitor unit together such that at least one of the pieces is detachable.

Figure 3 shows a capacitor unit 300 comprising four pieces 301-304 which may be equivalent to the pieces 101-104 described with reference to Figure 1. The pieces 301-304 are joined together by means of attaching devices 331-334 to form the hollow body of the capacitor unit 300, thereby defining the hollow center or inner space 320 of the capacitor unit 300. In the present example, the attaching devices used for assembling the plurality of pieces 301-304 together are screws.

More specifically, the capacitor unit 300 may comprise a first screw 331 for attaching a first piece 301 with a second piece 302, a second screw 332 for attaching the second piece 302 with a third piece 302, a third screw 333 for attaching the third piece 303 with a fourth piece 304, and a fourth screw 334 for attaching the fourth piece 304 with the first piece 301. As a result, a hollow body is obtained. It will be appreciated that the screws may be advantageously be loosely mounted such that gaps are formed between two successive pieces. In some other embodiments however, the screws may be tightened such that the four pieces 301-304 are in physical contact with each other, thereby resulting in a closed loop. The screws may be inserted in enclosures (or boxes) of the pieces 301-304. The enclosures may be made of electrically conductive (e.g. metallic) material or non-electrically conductive material.

Figure 3 also illustrates that the hollow body of the capacitor unit may delimit an inner space 320 adapted to receive at least one switching device 350. The switching device 350 may be arranged in the hollow center of the capacitor unit 300 such that the hollow body surrounds the entire switching device 350.

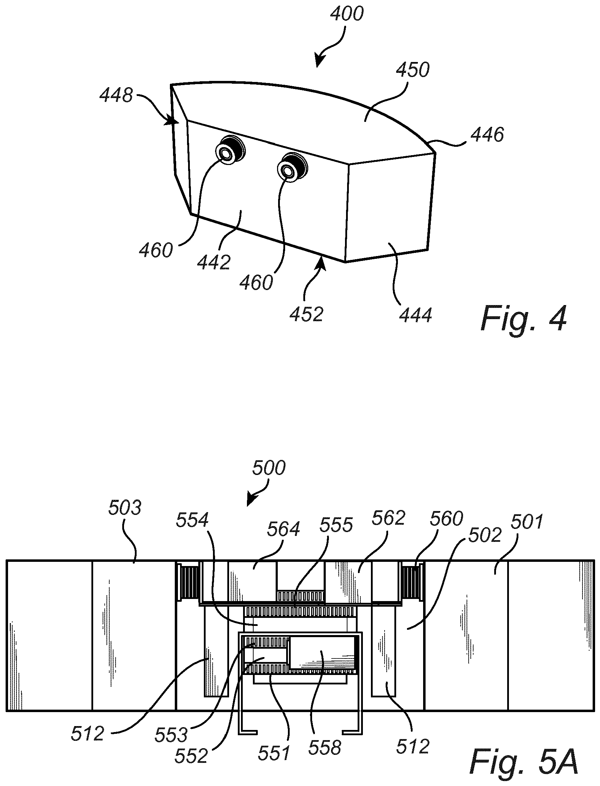

Figure 4 shows a schematic view of a piece of a capacitor unit according to an embodiment.

Figure 4 shows an enlarged view of a piece 400 of a capacitor unit such as e.g. the capacitor unit 100 described with reference to Figure 1. The piece 400 may therefore correspond to any one of the pieces 101-104.

Figure 4 shows a piece 400 having the shape of a trapezoidal block with one curved face 446. More specifically, the piece 400 comprises a first surface 446 defining a portion of the outside surface of the hollow body and a second surface 442 defining a portion of the inner space defined by the hollow body. The piece 400 comprises also two side surfaces 444, 448, each of which is to be arranged in contact with, or facing (closely to), a neighboring piece when assembled in a capacitor unit. The piece comprises also a base surface 452 (or bottom surface) and a top surface 450.

In the piece 400, the two side surfaces form walls extending in planes intersecting the first (curved) surface 446 forming a portion of the outside of the capacitor unit at an angle which is less than 90 degrees. The two side surfaces are linked by the second surface 442 forming a portion of the inner space of the capacitor unit 400. The base surface 452 and the top surface 450 extend in planes which perpendicularly intersect the two side surfaces and the first and second surfaces. The surfaces of the piece form a closed box in which an insulating material or in which a plurality of capacitive sub-elements may be arranged to provide the capacitive functionality of the piece 400.

It will be appreciated that, although Figure 4 shows a piece having a trapezoidal shape, other geometries may be envisaged. For example, the two side surfaces 444 and 448 may perpendicularly intersect the first surface and the second surface, thereby resulting in a more cubic shaped piece or section of the capacitor unit. Further, the second surface defining a portion of the inner space of the capacitor unit may be curved, thereby defining a more circular inner space, rather than a square inner space such as obtained with the piece shown in Figure 4.

Figure 4 also shows that the piece 400 comprises electrical connectors 460 arranged at the second surface 442 defining a portion of the inner space of the capacitor unit. In other words, the electrical connectors are arranged at the wall facing the inner space defined by the hollow body. The electrical connectors 460 may be used for connection to at least one switching device or power converter circuitry arranged in the hollow center of the capacitor unit.

Generally, the pieces of a capacitor unit, such as the piece 400 shown in Figure 4, form an enclosure or container in which at least one capacitor element may be arranged. The capacitor element may include metal plates and a dielectric material arranged between the metal plates. The capacitor element may for example be a wound-film capacitor. The enclosure or container defined by a piece may be made of electrically conductive material, such as a metal, but may also be made of a non-conductive material. Further, depending on whether the enclosure is to be used for shielding, i.e. depending on the application, the enclosure or container may also be coated by a non-conductive painting. Assembling the plurality of pieces may result in a cylindrical capacitor.

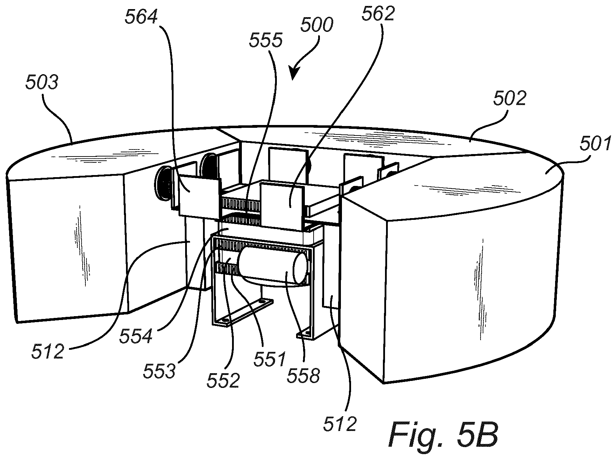

Figure 5 shows a schematic perspective view and a schematic side view of a power converter cell in accordance with an embodiment.

Figure 5 shows a converter cell 500 comprising a capacitor unit including a plurality of pieces 501-503 equivalents to the pieces of the capacitor unit 100 described with reference to e.g. Figure 1. It will be appreciated that, in Figure 5, the fourth piece of the capacitor unit is not shown for the purpose of illustrating the components arranged within the capacitor unit of the converter cell 500, i.e. the components arranged at the hollow center portion of the hollow body formed by the pieces 501-503.

Figure 5 shows that the converter circuitry of the power converter cell 500 may include a stack of a plurality of switching devices (or electronic components). In the embodiment shown in Figure 5, two switching devices 552, 554 are shown. These switching devices 552, 554 are arranged in thermal contact with a plurality of heat sinks or cooling plates 551, 553, 555 within the hollow center of the capacitor unit 501-503.The switching devices 552, 554 and the heat sinks 551, 553, 555 are arranged as a stack. In particular, a first surface of the heat sink 553 is arranged in thermal contact with a first switching device 554 and a second surface (opposite to the first surface) of the heat sink 553 is arranged in thermal contact with the second switching device 552. The cooling plates 551, 553, 555 are arranged on both sides of the switching devices 552, 554.

Figure 5 also illustrates that the power converter cell 500 may include gate drive units 512, which in the example of Figure 5 are located between a face of a piece 501 facing the inner space delimited by the hollow body and the stack of switching devices and cooling plates 551-555. Figure 5 also shows that the power converter cell may include a by-pass switch 558, as represented by the cylindrical tube extending in horizontal direction in Figure 5.

Figure 5 also shows electrical connectors 562, 564 for connection of the power converter circuit (i.e. the switching devices) to the pieces 501-503 via their electrical connectors 560 (which correspond to the electrical connectors 460 described with reference to Figure 4). The electrical connector denoted 562 may represent a positive connection from the capacitor unit while the electrical connector denoted 564 may represent a negative connection from the capacitor unit. In this respect, the bushings or electrical connectors 560 for connection between the power converter circuit (i.e. the switching devices 552, 554) and the capacitor unit may be arranged at an upper part of an inner wall of the capacitor unit in order to reduce the effect of electromagnetic field around the location where the switching devices 552, 554 are installed, such as in the embodiments depicted in Figures 4 and 5.

Figure 5 also illustrates that the components 512, 551-555 and 558 may be arranged in the inner space delimited by the hollow body of the capacitor unit formed by the pieces 501-503 (and the fourth piece, not represented in Figure 5) such that the capacitor unit surrounds these components.

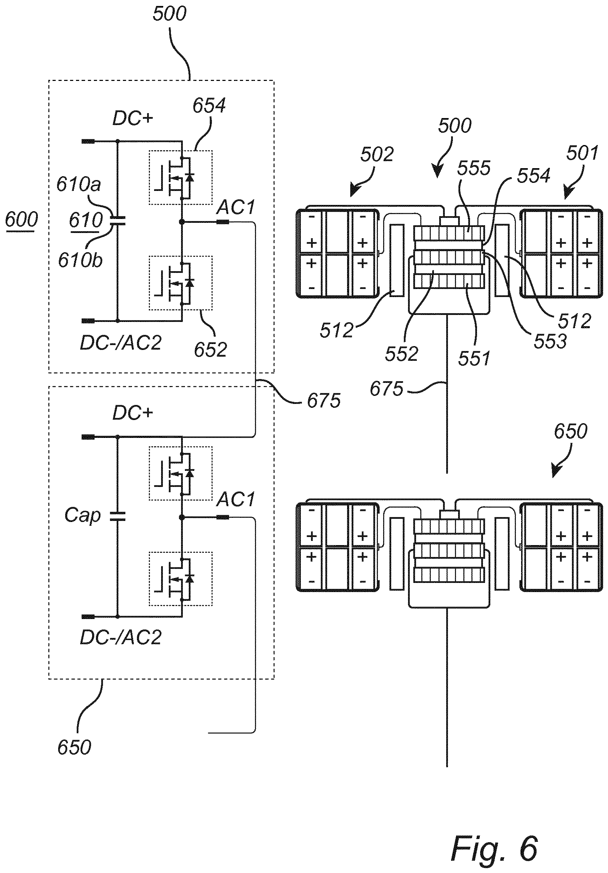

Figure 6 shows a circuit diagram illustrating the electrical connections of a converter cell in accordance with an embodiment.

Figure 6 shows a circuit diagram 600 illustrating the electrical connections of the switching devices (e.g. transistors) and the capacitor of the converter cell 500 described with reference to Figure 5. In the circuit diagram 600, the upper part shows the electrical connections in a first power converter cell 500 while the lower part shows the electrical connections in a second power converter cell 650.

In the first power converter cell 500, the switching devices 654 and 652 may for example be IGBTs but may also be other types of semiconductor-based switching devices. As mentioned above, in some embodiments, the types of switching devices may for example be MOSFETs, IGBTs, IGCTs, GTOs, HEMTs or HBTs and the types of semiconductors may for example be silicon, silicon carbide, Gallium Nitride or Gallium Arsenide. A switching device 652 or 654 may comprise two semiconductor chips in the form of a transistor and a diode connected in parallel to the transistor, such as represented in Figure 6. In some embodiments, however, the switching device may be a single-chip component adapted to replace the two semiconductor chips.

In the present embodiment, the two switching devices 652, 654 are connected in series in a branch itself connected in parallel with the capacitor 610. A first electrode 610a of the capacitor 610 of the first power convert cell 500 is connected to a first port or terminal (e.g. the drain) of a first switching device (or transistor) 654 while a second electrode 610b of the capacitor 610 is connected to a second port or terminal (e.g. the source) of a second switching device or transistor 652. A third port or terminal (e.g. the source) of the first switching device 654 is connected to a fourth port or terminal (e.g. the drain) of the second switching device 652.

In the first power converter cell 500 shown in Figure 6, the first electrode 610a of the capacitor 610 provides a positive bias (DC+) to the first switching device 654 while the second electrode 610b of the capacitor 610 provides a negative bias (DC-) to the second switching device 652.

As already illustrated in Figure 5, and further exemplified here in Figure 6, the switching devices 652 and 654 may be arranged in a stack (i.e. may be arranged on top of each other) within the hollow center of the capacitor unit 610. The capacitor unit (or capacitor) 610 comprises a plurality of pieces, such as denoted 501 and 502 in Figure 6. It will be appreciated that the switching devices denoted 552 and 554 in Figures 5 and 6 may correspond to the switching devices denoted 652 and 654 in Figure 6, respectively.

Further, the upper part of the right-hand side of the drawing shown in Figure 6 may correspond to the power converter cell shown in Figure 5 wherein the capacitor unit includes a plurality of pieces 501-503 (only 501 and 502 are shown in Figure 6) and the power converter cell includes a stack of switching devices and cooling plates 551-555. While the gate drive units 512 are also represented in Figure 6, the by-pass switch 558 has been omitted for not obscuring the figure.

Figure 6 also illustrates that a piece 501, 502 may include a plurality of capacitive sub-elements connected together to provide the capacitive functionality of the piece.

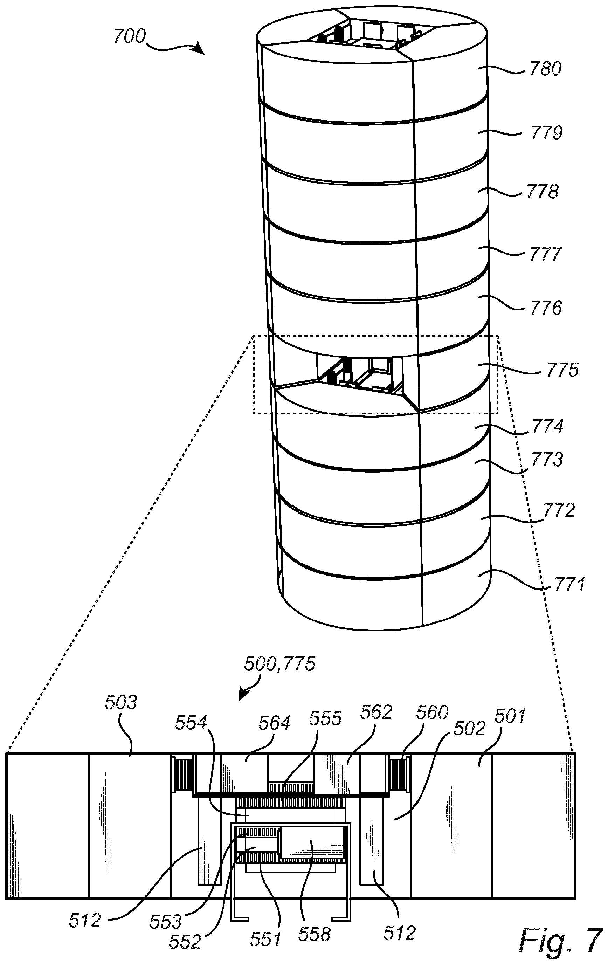

In the power converter circuit 600, the second power converter cell 650 is identical to the power converter cell 500. The first and second power converter cells 500 and 650 may be arranged as a stack to form a valve unit, as will be further described with reference to Figure 7.

The power converter circuit 600 comprises also an electrical connection 675 between the first power converter cell 500 and the second power converter cell 650. In particular, the positive bias line (DC+) of the second power converter cell 650 is connected to an electrical node arranged between the two switching devices 652, 654 of the first power converter cell 500 (i.e. at the node connecting the drain of the transistor of the second switching device 652 and the source of the transistor of the first switching device 654 in the first power converter cell 500). The electrical connection 675 may be a conductor, e.g. in the form of a bus bar.

It will also be appreciated that a power converter circuit of a valve unit may comprise more electrical connections than those shown in the circuit diagram 600 of Figure 6.

Figure 7 shows a schematic view of a valve unit 700 of a power converter, such as for example an HVDC power converter, in accordance with some embodiments. The valve unit 700 comprises a plurality of converter cells 771-780, i.e. ten converter cells in the present example, arranged as a stack. However, the valve unit 700 may comprise any number of power converter cells, depending on the application and consequently on the desired voltage or desired power. The valve unit 700 may also comprise high voltage capacitor shields arranged between two adjacent (or successive) power converter cells.

As illustrated in the enlarged view of a portion of the valve unit shown in Figure 7, a power converter cell 775 in the valve unit 700 may comprise a capacitor unit and power converter circuit of the type described with reference to any one of Figures 1-6. For illustrative purposes, the power converter cell 775 may be equivalent to the power converter cell described with reference to Figure 5. Further, the power converter cells shown in Figure 6 include capacitor units having disc-shaped enclosures. Other shapes may be envisaged, such as enclosures with circular, elliptical or rectangular cross-sections. In an embodiment, the capacitor units (and thereby the power converter cells) may have the form of rings surrounding the power converter circuits.

As already illustrated in Figure 6, the power converter circuits of the power converter cells 771-780 may for example be electrically connected in series for increasing the input and/or output voltage of the valve unit 700.

It will be appreciated that an HV power station may be formed by connecting a plurality of (at least two) valve units together, such as two stacks of power converter cells as shown in Figure 7.

As illustrated in Figure 7, the use of a capacitor unit formed of a hollow body divided in a plurality of pieces to obtain a power converter cell is beneficial since detachment of one of the pieces facilitates the accessibility to any components arranged within such hollow capacitor units, thereby facilitating maintenance operations and reducing the space requirement for such operations.

The present disclosure may find applications in e.g. power converter stations for high power transmission, with very high converter voltage and power (in the Giga Watt range). In such applications, each electrical phase may have its own converter arm, i.e. each phase may be obtained by the serial connection of a plurality of valve units. Thus, in order to achieve the high-required voltage, hundreds of converter cells may have to be stacked in series.

The embodiments of the present disclosure are however not limited to such high power applications and it is also envisaged to apply the capacitor units and converter cells described herein in low voltage and medium voltage equipments. For example, embodiments of the present disclosure may be used for motor drives.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A converter cell (500) comprising:
a capacitor unit (100) including a hollow body extending along an axial direction (108) and at least one switching device arranged at an inner space delimited by the hollow body of said capacitor unit such that the capacitor unit surrounds said at least one switching device,
**characterised in that** said body includes
a plurality of pieces (101-104), each piece forming a section of the hollow body, wherein at least one of the pieces is a detachable section of the hollow body and wherein a piece includes at least one capacitor element.

2. The converter cell of claim 1, wherein the hollow body includes an outside surface (106) which is elliptic, circular and/or which comprises at least one rounded corner.

3. The converter cell of any one of the preceding claims, wherein the pieces are distributed around said axial direction, the pieces being arranged in a plane intersecting said axial direction.

4. The converter cell of any one of the preceding claims, wherein each of the pieces defines a section of a ring such that the hollow body is ring-shaped.

5. The converter cell of any one of the preceding claims, wherein an inner space (120, 220) defined by the hollow body is elliptic, circular, polygonal or square.

6. The converter cell of any one of the preceding claims, wherein a piece (400) comprises at least one surface (446) defining a portion of an outside surface of the hollow body, at least one surface (442) defining a portion of an inner space defined by the hollow body and at least one surface (444, 448) in contact with, or facing, a neighboring piece.

7. The converter cell of any one of the preceding claims, wherein a piece includes an enclosure in which at least one capacitor element is arranged.

8. The converter cell of any one of the preceding claims, wherein a piece includes a plurality of capacitor elements.

9. The converter cell of any one of the preceding claims, further comprising at least one attaching device (334) for assembling the plurality of pieces (301-304) together.

10. The converter cell of any one of the preceding claims, further comprising electrical connectors (460) arranged at a wall of a piece for connection to at least one switching device, said wall facing an inner space defined by the hollow body.

11. A valve unit comprising a plurality of converter cells as defined in any one of the preceding claims, said plurality of converter cells being arranged as a stack.

12. A high voltage direct current converter station, comprising at least two valve units as defined in claim 11.

## Patentansprüche

1. Wandlerzelle (500), die Folgendes umfasst:
eine Kondensatoreinheit (100), die einen Hohlkörper einschließt, der sich entlang einer Axialrichtung (108) erstreckt, und mindestens eine Schaltvorrichtung, die an einem Innenraum angeordnet ist, der durch den Hohlkörper der Kondensatoreinheit begrenzt wird, so dass die Kondensatoreinheit die mindestens eine Schaltvorrichtung umschließt,
**dadurch gekennzeichnet, dass** der Körper Folgendes umfasst:
eine Vielzahl von Stücken (101-104), wobei jedes Stück einen Abschnitt des Hohlkörpers bildet,
wobei mindestens eines der Stücke ein lösbarer Abschnitt des Hohlkörpers ist, und wobei ein Stück mindestens ein Kondensatorelement enthält.

2. Wandlerzelle nach Anspruch 1,
wobei der Hohlkörper eine Außenfläche (106) aufweist, die elliptisch oder kreisförmig ist, und/oder die mindestens eine gerundete Ecke aufweist.

3. Wandlerzelle nach einem beliebigen der vorhergehenden Ansprüche,
wobei die Stücke um die Axialrichtung verteilt und in einer Ebene angeordnet sind, die sich mit der Axialrichtung schneidet.

4. Wandlerzelle nach einem beliebigen der vorhergehenden Ansprüche,
wobei jedes der Stücke einen Abschnitt eines Rings definiert, so dass der Hohlkörper ringförmig ist.

5. Wandlerzelle nach einem beliebigen der vorhergehenden Ansprüche,
wobei ein durch den Hohlkörper definierter Innenraum (120, 220) elliptisch, kreisförmig, polygonal oder quadratisch ist.

6. Wandlerzelle nach einem beliebigen der vorhergehenden Ansprüche,
wobei ein Stück (400) mindestens eine Oberfläche (446) aufweist, die einen Teil einer Außenfläche des Hohlkörpers definiert, mindestens eine Oberfläche (442), die einen Teil eines durch den Hohlkörper definierten Innenraums definiert, und mindestens eine Oberfläche (444, 448), die mit einem benachbarten Stück in Kontakt ist oder diesem zugewandt ist.

7. Wandlerzelle nach einem beliebigen der vorhergehenden Ansprüche,
wobei ein Stück ein Gehäuse aufweist, in dem mindestens ein Kondensatorelement angeordnet ist.

8. Wandlerzelle nach einem beliebigen der vorhergehenden Ansprüche,
wobei ein Stück eine Vielzahl von Kondensatorelementen enthält.

9. Wandlerzelle nach einem beliebigen der vorhergehenden Ansprüche,
die ferner mindestens eine Befestigungsvorrichtung (334) aufweist, um die Vielzahl von Stücken (301-304) zusammenzuhalten.

10. Wandlerzelle nach einem beliebigen der vorhergehenden Ansprüche,
die ferner elektrische Verbinder (460) aufweist, die an einer Wand eines Stücks angeordnet sind, um eine Verbindung mit mindestens einer Schaltvorrichtung herzustellen, wobei die Wand einem durch den Hohlkörper definierten Innenraum zugewandt ist.

11. Ventileinheit, die eine Vielzahl von Wandlerzellen aufweist, wie in einem beliebigen der vorhergehenden Ansprüche definiert, wobei die Vielzahl von Wandlerzellen als Stapel angeordnet sind.

12. Hochspannungs-Gleichstrom-Wandlerstation, die mindestens zwei Ventileinheiten aufweist, wie in Anspruch 11 definiert.

## Revendications

1. Cellule (500) de convertisseur comprenant :
une unité de condensateur (100) comprenant un corps creux s'étendant le long d'une direction axiale (108) et au moins un dispositif de commutation agencé au niveau d'un espace interne délimité par le corps creux de ladite unité de condensateur de sorte que l'unité de condensateur entoure ledit au moins un dispositif de commutation,
**caractérisée en ce que** ledit corps comprend
une pluralité de pièces (101 à 104), chaque pièce formant une section du corps creux, dans laquelle au moins une des pièces est une section détachable du corps creux et dans laquelle une pièce comprend au moins un élément de condensateur.

2. Cellule de condensateur selon la revendication 1, dans laquelle le corps creux comprend une surface extérieure (106) qui est elliptique, circulaire et/ou qui comprend au moins un coin arrondi.

3. Cellule de convertisseur selon l'une quelconque des revendications précédentes, dans laquelle les pièces sont réparties autour de ladite direction axiale, les pièces étant agencées dans un plan coupant ladite direction axiale.

4. Cellule de convertisseur selon l'une quelconque des revendications précédentes, dans laquelle chacune des pièces définit une section d'un anneau de sorte que le corps creux soit de forme annulaire.

5. Cellule de convertisseur selon l'une quelconque des revendications précédentes, dans laquelle un espace interne (120, 220) défini par le corps creux est elliptique, circulaire, polygonal ou carré.

6. Cellule de convertisseur selon l'une quelconque des revendications précédentes, dans laquelle une pièce (400) comprend au moins une surface (446) définissant une partie d'une surface extérieure du corps creux, au moins une surface (442) définissant une partie d'un espace interne défini par le corps creux et au moins une surface (444, 448) en contact avec une pièce voisine, ou tournée vers celle-ci.

7. Cellule de convertisseur selon l'une quelconque des revendications précédentes, dans laquelle une pièce comprend une enceinte dans laquelle est agencé au moins un élément de condensateur.

8. Cellule de convertisseur selon l'une quelconque des revendications précédentes, dans laquelle une pièce comprend une pluralité d'éléments de condensateur.

9. Cellule de convertisseur selon l'une quelconque des revendications précédentes, comprenant en outre au moins un dispositif de fixation (334) pour assembler la pluralité de pièces (301 à 304).

10. Cellule de convertisseur selon l'une quelconque des revendications précédentes, comprenant en outre des connecteurs électriques (460) agencés au niveau d'une paroi d'une pièce pour une connexion à au moins un dispositif de commutation, ladite paroi étant tournée vers un espace interne défini par le corps creux.

11. Unité de valve comprenant une pluralité de cellules de convertisseur telles que définies selon l'une quelconque des revendications précédentes, ladite pluralité de cellules de convertisseur étant agencée sous la forme d'une pile.

12. Station de conversion de courant continu haute tension, comprenant au moins deux unités de valve telles que définies selon la revendication 11.
